# EUROPEAN PATENT APPLICATION

(11) **EP 1 258 958 A1**
(43) Date of publication of application: **20.11.2002**
(21) Application number: 02076876.8
(22) Date of filing: 14.05.2002
(51) Int. Cl.: H02B 1/40

(54) **Electrical enclosure made of thermoplastic polymer**

(30) Priority: 17.05.2001 IT MI20011029
(71) Applicant: ABB Service S.r.l., 20135 Milano (IT)
(72) Inventor: Pezzato, Maurizio, 36067 San Giuseppe di Cassola (VI) (IT)
(74) Representative: Giavarini, Francesco

(57) **Abstract**

A containment enclosure for devices of an electrical distribution and/or automation panel, comprising a body provided with a lower wall, an upper wall, a rear wall, two side walls, and an open front wall that can be coupled to an element for opening/closing the panel, the walls being arranged with respect to each other so as to form an internal volume suitable to accommodate the devices, its particularity consisting of the fact that the body is formed, in at least one portion, by a core that comprises a first compound based on a thermoplastic polymer and an outer skin that comprises a second compound based on a thermoplastic polymer, the first and second compounds being mutually different.

## Description

The present invention relates to a containment enclosure for devices of an electrical distribution and/or automation panel; more particularly, the enclosure according to the invention is characterized by its special constructive structure, which allows to have an optimized functional performance, optimum flexibility of use, to recycle substantially totally the materials used and therefore to have a low environmental impact, while reducing production costs and most of all production times.

It is known that electrical panels, switchboards and similar devices, used for electrical distribution or automation applications or mixed distribution and automation applications, use a containment enclosure configured so as to define a containment volume in which one or more electrical and/or electronic devices, such as for example modular switches, enclosed switches, residual-current units, pushbuttons, control instruments, et cetera, suitable to be connected electrically to a power supply network, are arranged. Additional components, such as for example metallic fixing guides, plates, supporting elements, cable raceways, wiring systems et cetera, operatively associated with the devices in order to provide the intended electrical panel configurations, are also used inside the enclosure. Said enclosures, in addition to containing the devices and components that constitute the electrical panel, must have certain properties and characteristics that are specific for their practical use; for example, they must provide a suitable degree of electrical insulation, have sufficient structural strength, be easy to handle, ensure adequate resistance to the aggression of chemical and atmospheric agents, be self-extinguishing, et cetera; furthermore, especially in some specific applications, for example for use in public places, such as hotels, it is preferable that they have a configuration that is as clean and aesthetically appreciable as possible.

In the background art, known types of enclosure, despite performing adequately the required functions, have drawbacks and disadvantages.

In particular, the solutions that are currently used entail using plastics or metal to produce the enclosures. In the first case, the body of the enclosures is formed by walls filled with thermosetting material, specifically a polyester loaded with glass fibers so as to have adequate structural strength; furthermore, additives can be added to the thermosetting material, for example in order to obtain characteristics providing resistance to chemicals, self-extinguishing characteristics, et cetera. The great drawback of this solution mainly resides in the use of the thermosetting material, which inherently does not lend itself to recycling after use and therefore entails problems from the point of view of disposal and environmental compatibility.

Furthermore, the glass fibers usually emerge superficially from the walls of the enclosure and have a negative effect not only on the aesthetic quality of the assembly, which is not ideal, but also on the safety conditions and particularly on the handling of said enclosures.

If instead the bodies of the enclosures are made of metal, the main drawback is their less than optimum flexibility from the point of view of use; while there are no great problems in use in closed or scarcely aggressive environments, when the panel is to be installed in outdoor environments and particularly in aggressive environments, in order to ensure an adequate useful life the metallic walls must be appropriately coated and treated on their surface, consequently increasing production times and costs.

The aim of the present invention is to provide a containment enclosure for devices of an electrical distribution and/or automation panel that allows to obviate the above cited drawbacks and is capable of providing at the same time the required functional performance in an optimized manner.

Within the scope of this aim, an object of the present invention is to provide a containment enclosure for devices of an electrical distribution and/or automation panel that lends itself to substantially complete recycling at the end of its useful life.

Another object of the present invention is to provide a containment enclosure for devices of an electrical distribution and/or automation panel that is flexible in practical use and can be used in indoor and outdoor environments, including particularly aggressive ones, without requiring specific treatments.

Another object of the present invention is to provide a containment enclosure for devices of an electrical distribution and/or automation panel that has a clean and aesthetically appreciable configuration and whose constructive structure can be handled with extreme safety.

Another object of the present invention is to provide a containment enclosure for devices of an electrical distribution and/or automation panel that allows to reduce production times and costs with respect to known types of enclosure.

Another object of the present invention is to provide a containment enclosure for devices of an electrical distribution and/or automation panel that is highly reliable, relatively easy to provide and at competitive costs.

This aim, these objects and others that will become apparent hereinafter are achieved by a containment enclosure for devices of an electrical distribution and/or automation panel, comprising a body provided with a lower wall, an upper wall, a rear wall, two side walls, and an open front wall that can be coupled to an element for opening/closing the panel, said walls being arranged with respect to each other so as to form an internal volume suitable to accommodate said devices, characterized in that said body is formed, in at least one portion, by a core that comprises a first compound having a thermoplastic polymer base and an outer skin that comprises a second compound having a thermoplastic polymer base, said first and second compounds having a polymer base being mutually different.

In this manner, the enclosure according to the invention has an entirely innovative configuration as regards both its constructive structure, which is substantially of the sandwich type, and the materials used, which by being of the thermoplastic type allow full recycling at the end of practical use.

Further characteristics and advantages of the invention will become apparent from the description of preferred but not exclusive embodiments of the enclosure according to the invention, illustrated only by way of non-limitative example in the accompanying drawings, wherein:
Figure 1 is a perspective view of the enclosure according to the invention;
Figure 2 is a sectional view of the enclosure of Figure 1.

The enclosure according to the invention is described with reference to its use in electrical panels, without intending to limit in any way the scope of its application, the definition of electrical panel being understood to include devices that are similar and functionally equivalent thereto, such as for example electrical switchboards for wall mounting or flush mounting, et cetera.

With reference to the figures cited above, the containment enclosure for devices of an electrical panel according to the invention, generally designated by the reference numeral 100, comprises a body which is shaped substantially like a parallelepiped and has a lower wall 1, an upper wall 2, a rear wall 3, two side walls 4, and a front wall 5, which are arranged with respect to each other so as to form an internal volume 6 that is suitable to accommodate the various electrical and/or electronic devices and the components of the panel; clearly, both the overall geometric configuration of the enclosure and the shape and contour of the individual walls can be changed appropriately depending on the practical use.

Said devices and components, which can be constituted for example by switches of various kinds, control pushbuttons, control instruments, supporting guides, cable raceways, mounting plates, et cetera, during installation are placed inside the volume 6 and are operatively associated with each other and with the enclosure itself so as to provide the intended panel configurations. Both the constructive configurations of the panel and the constructive embodiments of the various devices and components are of a kind widely known in the art and accordingly they are not illustrated by figures.

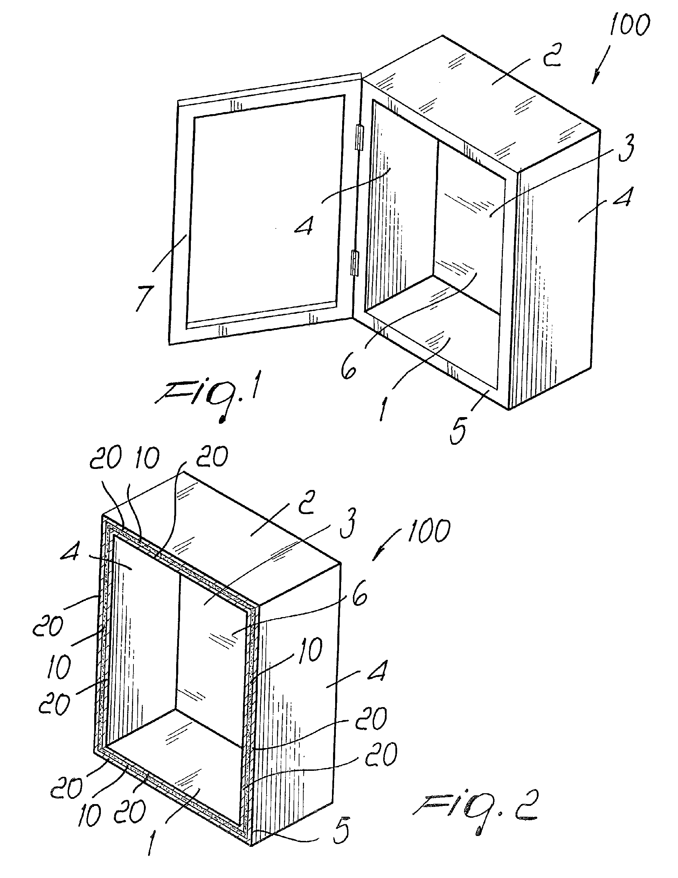

Furthermore, as shown in Figure 1, the front wall 5 is generally open and can be coupled to a panel opening/closure element, generally a door 7; clearly, depending on the various requirements of application, the door 7 can be replaced with an access flap or can be used in combination with a complementary door, or it is possible to use a protective faceplate or panel, et cetera.

Advantageously, as shown in Figure 2, the body of the enclosure 100 according to the invention has, in at least one portion, a constructive structure that has a core 10, which comprises a first compound having a thermoplastic polymer base, and an outer skin 20, which comprises a second compound having a thermoplastic polymer base, said first and second compounds being as a whole mutually different.

According to a particularly advantageous embodiment, the core 10 of the body of the enclosure 100 is constituted by an expanded compound having a thermoplastic polymer base.

In particular, said expanded compound based on a thermoplastic polymer comprises a polyolefin, preferably polypropylene; furthermore, the thermoplastic base can receive the addition of a mineral filler constituted for example by calcium carbonate, talc, kaolin, et cetera, so as to have greater structural rigidity.

As an alternative, the expanded compound of the core 10 can comprise polyamide (PA) or acrylonitrile-butadiene-styrene (ABS), or polycarbonate (PC), or polyvinyl chloride (PVC), or mixtures thereof, again with or without the addition of mineral filler.

In turn, the outer skin 20 is constituted by a non-expanded compound having a thermoplastic polymer base. In particular, said non-expanded or solid compound based on a thermoplastic polymer comprises a polyolefin, preferably polypropylene, with the addition of appropriate self-extinguishing additives. For example, said self-extinguishing additives can comprise organic and/or inorganic compounds of bromine or other halogens, organic compounds of phosphorus and/or nitrogen, metallic hydroxides, for example aluminum or magnesium hydroxide, and/or other active and/or synergistic substances.

Alternatively, the compound of the outer skin 20 can be constituted by polyamide (PA) or acrylonitrile-butadiene-styrene (ABS) or polycarbonate (PC) or polyvinyl chloride (PVC) or mixtures thereof, with or without the addition of self-extinguishing material.

Furthermore, the compound of the outer skin 20 can comprise additional additives providing stabilization against UV rays, for example hindered amines (HALS) such as benzotriazole or similar compounds, and other additives providing stabilization against chemical and/or atmospheric agents; finally, the compound of the outer skin 20 can also comprise a mineral filler.

In this manner, the enclosure 100 according to the present invention is made of thermoplastic material, and this makes it fully recyclable after use, with a consequent benefit from the point of view of environmental impact and compatibility and allows to have structures that are lighter than known ones. Furthermore, it has a sandwich-type constructive configuration, in which the outer skin 20 has a solid and compact structure that provides the necessary mechanical characteristics in terms of rigidity and impact resistance, while the inner core 10, by virtue of its expanded structure, allows further structural lightening and a saving of material with respect to enclosures of a known type and helps to increase flexural rigidity.

Furthermore, the presence of additional materials in the compound that forms the outer skin 20 allows to have additional features, such as resistance to the aggression of external elements, self-extinguishing, et cetera. It should also be noted that the absence of glass fibers from the outer cladding, combined with the greater lightness produced by the internal structure, in addition to facilitating the handling of the enclosure and increasing its safety, allows to obtain external configurations that are extremely clean and aesthetically more pleasing.

Finally, the enclosure 100 thus obtained, indeed by virtue of its constructive structure, can be used very flexibly even in highly aggressive indoor and outdoor environments without requiring particular additional treatments; it can also be used equally to produce distribution panels or automation panels or mixed automation-distribution panels without requiring any modification.

Accordingly, the present invention also relates to an electrical panel, characterized in that it comprises a containment enclosure 100 according to the above description.

It should also be noted that the structure formed by compounds having a thermoplastic base lends itself to be produced with automatic production methods, particularly by means of a co-injection molding process, even for significantly thick enclosures, and this allows to reduce significantly production times and therefore the corresponding costs.

In practice it has been found that the enclosure according to the invention fully achieves the intended aim and objects; it is also worth nothing that all the innovative functions and inventive aspects of the invention can be obtained by using commonly commercially available elements and materials.

The containment enclosure thus conceived is susceptible of numerous modifications and variations, all of which are within the scope of the inventive concept; all the details may furthermore be replaced with other technically equivalent elements.

In practice, the materials used, as well as the contingent shapes and dimensions, may be any according to the requirements and the state of the art.

## Claims

1. A containment enclosure for devices of an electrical distribution and/or automation panel, comprising a body provided with a lower wall, an upper wall, a rear wall, two side walls, and an open front wall that can be coupled to an element for opening/closing the panel, said walls being arranged with respect to each other so as to form an internal volume suitable to accommodate said devices, **characterized in that** said body is formed, in at least one portion, by a core that comprises a first compound having a thermoplastic polymer base and an outer skin that comprises a second compound having a thermoplastic polymer base, said first and second compounds having a polymer base being mutually different.

2. The containment enclosure according to claim 1, **characterized in that** said first compound is an expanded compound having a thermoplastic polymer base.

3. The containment enclosure according to claim 1, **characterized in that** said second compound is a non-expanded compound having a thermoplastic polymer base.

4. The containment enclosure according to claim 2, **characterized in that** said expanded compound having a thermoplastic polymer base comprises a polyolefin.

5. The containment enclosure according to claim 4, **characterized in that** said expanded compound having a thermoplastic polymer base comprises polypropylene.

6. The containment enclosure according to claim 2, **characterized in that** said expanded compound having a thermoplastic polymer base comprises acrylonitrile-butadiene-styrene or polycarbonate or polyamide or polyvinyl chloride or mixtures thereof.

7. The containment enclosure according to one or more of claims 4 to 6, **characterized in that** said expanded compound having a thermoplastic polymer base comprises a mineral filler.

8. The containment enclosure according to claim 3, **characterized in that** said second non-expanded compound having a thermoplastic polymer base comprises a polyolefin.

9. The containment enclosure according to claim 8, **characterized in that** said second non-expanded compound having a thermoplastic polymer base comprises polypropylene.

10. The containment enclosure according to claim 3, **characterized in that** said second non-expanded compound having a thermoplastic polymer base comprises acrylonitrile-butadiene-styrene or polycarbonate or polyamide or polyvinyl chloride or mixtures thereof.

11. The containment enclosure according to one or more of claims 7 to 10, **characterized in that** said second non-expanded compound having a thermoplastic polymer base comprises at least one self-extinguishing additive.

12. The containment enclosure according to one or more of claims 7 to 11, **characterized in that** said second non-expanded compound having a thermoplastic polymer base comprises at least one additive providing stabilization against ultraviolet rays and/or at least one additive providing stabilization against chemical and/or atmospheric agents.

13. An electrical panel, **characterized in that** it comprises a containment enclosure according to one or more of the preceding claims.
